(19) Europäisches Patentamt

European Patent Office

Office européen des brevets

(11) **EP 2 696 615 B1**

(12) **EUROPEAN PATENT SPECIFICATION**

(45) Date of publication and mention
of the grant of the patent:
**12.09.2018 Bulletin 2018/37**

(51) Int Cl.:
*H04W 12/06* (2009.01)  *H04L 29/06* (2006.01)
*H04L 9/32* (2006.01)

(21) Application number: **13175679.3**

(22) Date of filing: **09.07.2013**

(54) **AUTHENTICATION REQUESTING APPARATUS, AUTHENTICATION PROCESSING APPARATUS, AND AUTHENTICATION EXECUTION METHOD BASED ON PHYSICALLY UNCLONABLE FUNCTION**

AUTHENTIFIZIERUNGSANFORDERUNGSVORRICHTUNG, AUTHENTIFIZIERUNGSVERARBEITUNGSVORRICHTUNG, UND AUTHENTIFIZIERUNGSAUSFÜHRUNGSVERFAHREN AUF BASIS VON PHYSIKALISCH UNKLONBAREN FUNKTIONEN

APPAREIL DE DEMANDE D'AUTHENTIFICATION, APPAREIL DE TRAITEMENT D'AUTHENTIFICATION ET PROCÉDÉ D'EXÉCUTION D'AUTHENTIFICATION SUR LA BASE DE FONCTION PHYSIQUEMENT NON CLONABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2012 KR 20120086382**

(43) Date of publication of application:
**12.02.2014 Bulletin 2014/07**

(73) Proprietor: **Electronics and Telecommunications Research Institute
Daejeon 305-700 (KR)**

(72) Inventors:
  • **Baek, Seon-Yeob
    305-348 Daejeon (KR)**

  • **Park, Sang-Hyun
    305-348 Daejeon (KR)**
  • **Yang, Kwang-Mo
    305-348 Daejeon (KR)**
  • **Park, Young-Mi
    305-348 Daejeon (KR)**
  • **Lee, Jun-Ho
    305-348 Daejeon (KR)**
  • **Park, Jong-Wook
    305-348 Daejeon (KR)**

(74) Representative: **Betten & Resch
Patent- und Rechtsanwälte PartGmbB
Maximiliansplatz 14
80333 München (DE)**

(56) References cited:
  **WO-A2-2006/081306  US-A1- 2008 279 373**

**EP 2 696 615 B1**

**Description**

BACKGROUND OF THE INVENTION

1. Technical Field

The present invention relates generally to an authentication requesting apparatus, an authentication processing apparatus and an authentication execution method based on a physically unclonable function (PUF) and, more particularly, to an authentication requesting apparatus, an authentication processing apparatus and an authentication execution method based on a PUF, which generate a challenge value from the state information of a wireless communication channel, generate a response value from an output value acquired by inputting the generated challenge value to a PUF circuit, and then perform authentication.

2. Description of the Related Art

Authentication technology refers to technology that enables an entity to verify the identity of another entity. In general, an entity that requests authentication in order to verify its identity is referred to as a "claimant," and an entity that processes authentication in order to verify the identity of a claimant is referred to as a "verifier." For authentication, a claimant should allow a verifier to verify its identity. Various verification methods for executing authentication have been proposed, and may be classified into the following three types of methods. The first type of methods are methods that perform verification based on items that are known to a claimant and a verifier. Verification methods using a password, a secrete key, or a private key, which is known only to a claimant and can be verified using a verification value, belong to the first type of methods. The second type of methods are methods that perform verification based on an item that is in the possession of a claimant. Verification methods using a passport, an identification card, or a smartcard as an object that is used to prove the identity of a claimant belong to the second type of methods. The third type of methods are methods that perform verification based on a unique characteristic that is in the possession of a claimant. Such a unique characteristic of a claimant may be the lines of the palm, a tone of voice, or a fingerprint in the case of a human, and a response to a specific input or a delay speed in the case of a device.

In connection with the last type of methods that perform verification based on a unique characteristic that is in the possession of a claimant, Korean Patent Application Publication No. 2010-0021446 discloses technology that generates a security key that is used to perform the authentication of a user or a device using a PUF. In general, a PUF is a technology for preventing the cloning of electronic devices, and determines cloning using the fact that even the same type of circuits exhibit different response outputs for a specific input depending on their circuit implementation process. In particular, a PUF is implemented chiefly using the wire delay, gate delay, optical response or the like of a circuit. Accordingly, there are various PUF implementation methods, including a ring oscillator method using a delay loop, an arbiter method using a switching circuit, a method using the randomness of an initial SRAM value, and a method using an output value for an optical input. A PUF has the advantage of mitigating hardware-based cloning attacks because an output value for an input value is generated by a circuit whenever required.

The conventional authentication technology using a PUF disclosed in Korean Patent Application Publication No. 2010-0021446 requires that a verifier should previously know information about the pair of challenge and response values of a PUF device that is in the possession of a claimant. If a claimant requests authentication, the verifier transmits a random challenge value to the claimant, and the claimant should generate a response value for the transmitted challenge value and transmit the response value to the verifier. However, since the conventional authentication technology is disadvantageous in that a pair of challenge and response values may be divulged by the hacking of a hacker, there is an urgent need for preventing a pair of challenge and response values from being divulged to the outside.

WO 2006/081306 A2 discloses a method and apparatus used for generating a perfectly random secret key between two or more transceivers in a wireless communication network. In a point- to-point system, both transceivers produce an estimate of the channel impulse response (CIR) based on the received radio signal. The CIR estimation is synchronized and may include error correction and detection. A long secret key of bits is generated from a digitized version of the CIR estimate, from which a perfectly secret encryption key is derived by privacy amplification.

SUMMARY OF THE INVENTION

Accordingly, the present invention is intended to provide an authentication execution technology that, in order to prevent a pair of challenge and response values from being divulged to the outside as a result of hacking during authentication using a PUF, prevents a challenge value from being divulged to the outside when the comparison between challenge values and the comparison between response values is performed for authentication, thereby preventing a hacker from becoming aware of a pair of challenge and response values even if the hacker acquires the response value.

Furthermore, the present invention is intended to provide an authentication execution technology that utilizes the state information of a wireless communication channel to generate a challenge value, thereby eliminating a need for the exchange of an additional challenge value between a claimant and a verifier.

Furthermore, the present invention is intended to provide an authentication execution technology that generates a challenge value using the state information of a wireless communication channel that has a random value depending on a change in a surrounding environment, or the moving speed or time of a user, thereby enabling a challenge value having a random value to be generated.

In accordance with an aspect of the present invention, there is provided an authentication requesting apparatus based on a PUF, including a signal transmission and reception unit configured to receive a first pilot signal from an authentication processing apparatus that processes authentication; a response generation unit configured to generate a challenge value based on the first pilot signal, to acquire an output value by inputting the challenge value into a PUF circuit, and to generate a response value from the output value; and an authentication request unit configured to request authentication by transmitting the response value to the authentication processing apparatus, to receive authentication result information from the authentication processing apparatus, and to determine whether authentication has been successful.

The authentication requesting apparatus including a channel state information estimation unit configured to estimate the state information of a communication channel between the authentication requesting apparatus and the authentication processing apparatus from the first pilot signal, and the response generation unit may generate the challenge value from the state information of the communication channel.

The signal transmission and reception unit may include a signal transmission unit configured to generate a second pilot signal, and to transmit the unique ID of the authentication requesting apparatus, the second pilot signal, and the response value to the authentication processing apparatus.

The signal transmission and reception unit may include a signal reception unit configured to receive the first pilot signal and the authentication result information from the authentication processing apparatus.

In accordance with another aspect of the present invention, there is provided an authentication processing apparatus based on a PUF, including a signal transmission and reception unit configured to transmit a first pilot signal to an authentication requesting apparatus that requests authentication, and to receive a response value for the first pilot signal and a second pilot signal from the authentication requesting apparatus; a response search unit configured to generate a challenge value based on the second pilot signal, to store information about mapping between reference challenge values and reference response values generated for respective reference challenge values using PUF circuits of authentication requesting apparatuses, and to search for a response value corresponding to the challenge value from the mapping information; and an authentication processing unit configured to process the authentication of the authentication requesting apparatus by comparing a response value received from the authentication requesting apparatus with the response value found by the response search unit, and to transmit authentication result information to the authentication requesting apparatus.

The authentication processing apparatus including a channel state information estimation unit configured to estimate the state information of a communication channel between the authentication requesting apparatus and the authentication processing apparatus from the second pilot signal, and the response search unit may generate the challenge value based on the state information of the communication channel.

The signal transmission and reception unit may include a signal transmission unit configured to generate the first pilot signal, and to transmit the first pilot signal and the authentication result information to the authentication requesting apparatus.

The signal transmission and reception unit may include a signal reception unit configured to receive the unique ID of the authentication requesting apparatus, a response value for the first pilot signal, and the second pilot signal from the authentication requesting apparatus.

The response search unit may search for a response value corresponding to the challenge value from mapping information corresponding to the unique ID.

In accordance with still another aspect of the present invention, there is provided an authentication execution method based on a PUF, including generating, by an authentication requesting apparatus, a first challenge value based on a first pilot signal received from an authentication processing apparatus; generating, by the authentication requesting apparatus, a first response value from an output value acquired by inputting the first challenge value into a PUF circuit; generating, by the authentication requesting apparatus, a second pilot signal, and transmitting, by the authentication requesting apparatus, the second pilot signal, together with the first response value, to the authentication processing apparatus; generating, by the authentication processing apparatus, a second challenge value based on the second pilot signal received from the authentication requesting apparatus; searching, by the authentication processing apparatus, for a second response value corresponding to the second challenge value from information about mapping between reference challenge values and reference response values generated for the respective reference challenge values by authentication requesting apparatuses using PUF circuits; and processing, by the authentication processing apparatus, authentication of the authentication requesting apparatus by comparing the first response value with the second response value, and transmitting, by the authentication processing apparatus, authentication result information to the authentication requesting apparatus.

Generating the first challenge value based on the first pilot signal including estimating the state information of the wireless communication channel between the authentication requesting apparatus and the authentication processing apparatus from the first pilot signal step; and generating the first challenge value from the state information of the wireless communication channel estimated from the first pilot signal.

Generating the second challenge value based on the second pilot signal may include estimating the state information of the wireless communication channel between the authentication requesting apparatus and the authentication processing apparatus from the second pilot signal; and generating the second challenge value from the state information of the wireless communication channel estimated from the second pilot signal.

Generating the second pilot signal and transmitting the second pilot signal, together with the first response value, to the authentication processing apparatus may include transmitting the unique ID of the authentication requesting apparatus to the authentication processing apparatus.

Searching for the second response value corresponding to the second challenge value may include searching for the second response value corresponding to the second challenge value from mapping information corresponding to the unique ID.

BRIEF DESCRIPTION OF THE DRAWINGS

The above and other objects, features and advantages of the present invention will be more clearly understood from the following detailed description taken in conjunction with the accompanying drawings, in which:

FIG. 1 is a block diagram illustrating the configuration of an authentication requesting apparatus based on a PUF according to an embodiment of the present invention;
FIG. 2 is a block diagram illustrating the configuration of the signal transmission and reception unit illustrated in FIG. 1;
FIG. 3 is a block diagram illustrating the configuration of the signal transmission unit illustrated in FIG. 2;
FIG. 4 is a block diagram illustrating the configuration of the signal reception unit illustrated in FIG. 2;
FIG. 5 is a block diagram illustrating the configuration of the response generation unit illustrated in FIG. 1;
FIG. 6 is a block diagram illustrating the configuration of an authentication processing apparatus based on a PUF according to an embodiment of the present invention;
FIG. 7 is a block diagram illustrating the configuration of the signal transmission and reception unit illustrated in FIG. 6;
FIG. 8 is a block diagram illustrating the configuration of the signal transmission unit illustrated in FIG. 7;
FIG. 9 is a block diagram illustrating the configuration of the signal reception unit illustrated in FIG. 7;
FIG. 10 is a block diagram illustrating the configuration of the response search unit illustrated in FIG. 6;
FIG. 11 is a flowchart illustrating an authentication execution method based on a PUF according to the present invention;
FIG. 12 is a flowchart illustrating the operation of the authentication requesting apparatus in the authentication execution method based on a PUF according to the present invention; and
FIG. 13 is a flowchart illustrating the operation of the authentication processing apparatus in the authentication execution method based on a PUF according to the present invention.

DESCRIPTION OF THE PREFERRED EMBODIMENTS

The present invention will be described in detail below with reference to the accompanying drawings. Repeated descriptions and descriptions of known functions and configurations which have been deemed to make the gist of the present invention unnecessarily vague will be omitted below. The embodiments of the present invention are intended to fully describe the present invention to a person having ordinary knowledge in the art. Accordingly, the shapes, sizes, etc. of elements in the drawings may be exaggerated to make the description clear.

An authentication system according to the present invention includes an authentication requesting apparatus for requesting authentication as a claimant, and an authentication processing apparatus for processing authentication as a verifier. The authentication requesting apparatus and the authentication processing apparatus exchange information required for mutual authentication and authentication processing result information by performing communication via a wireless channel. In this case, the authentication requesting apparatus and the authentication processing apparatus according to the present invention perform authentication using a PUF and the state information of a wireless communication channel.

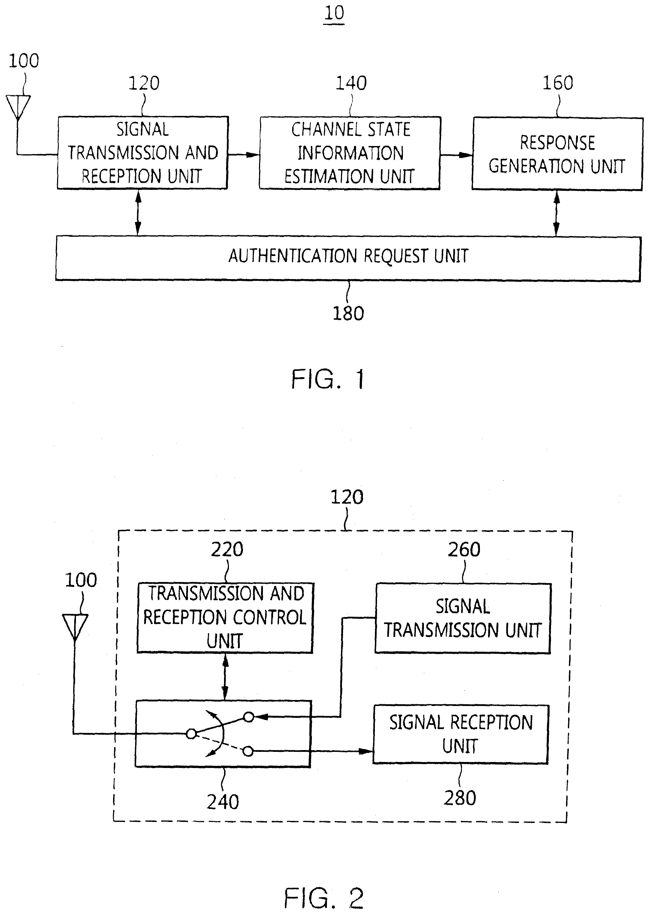

The configuration and operation of an authentication requesting apparatus based on a PUF according to the present invention will be described below with reference to FIG. 1 to FIG. 5.

FIG. 1 is a block diagram illustrating the configuration of the authentication requesting apparatus based on a PUF according to an embodiment of the present invention.

Referring to FIG. 1, the authentication requesting apparatus 10 based on a PUF according to the present invention includes an antenna 100, a signal transmission and reception unit 120, a channel state information estimation unit 140, a response generation unit 160, and an authentication request unit 180.

The signal transmission and reception unit 120 generates a wireless signal required for authentication and then transmits the wireless signal to an authentication processing apparatus via the antenna 100, or receives a wireless signal from the authentication processing apparatus. In this case, the signal transmission and reception unit 120 exchanges the wireless signals with the authentication processing apparatus over a wireless communication channel. The signal transmission and reception unit 120 may receive a pilot signal from the authentication processing apparatus and transfer the pilot signal to the channel state information estimation unit 140, or may receive authentication result information from the authentication processing apparatus and transfer the authentication result information to the authentication request unit 180. Furthermore, the signal transmission and reception unit 120 may generate a pilot signal under the control of the authentication request unit 180 and transmit the pilot signal to the authentication processing apparatus. In this case, the signal transmission and reception unit 120 may transmit the unique ID of the authentication requesting apparatus ID and a response value generated by the response generation unit 160 to the authentication processing apparatus under the control of the authentication request unit 180. The more detailed configuration and operation of the signal transmission and reception unit 120 will be described later with reference to FIGS. 2 to 4.

The channel state information estimation unit 140 estimates the state information of a wireless communication channel between the authentication requesting apparatus 10 and the authentication processing apparatus from the pilot signal received from the authentication processing apparatus via the signal transmission and reception unit 120. In this case, the channel state information estimation unit 140 acquires the state information of the wireless communication channel from a pilot signal from which interference and noise has been eliminated by the signal transmission and reception unit 120. For example, assuming that the number of wireless communication channels between the authentication requesting apparatus 10 and the authentication processing apparatus is n, the channel state information estimation unit 140 estimates the state information Wi of the i-th wireless communication channel of n wireless communication channels from the pilot signal received from the authentication processing apparatus. The authentication requesting apparatus 10 transmits the state information $W_i$ estimated for the i-th wireless communication channel to the response generation unit 160.

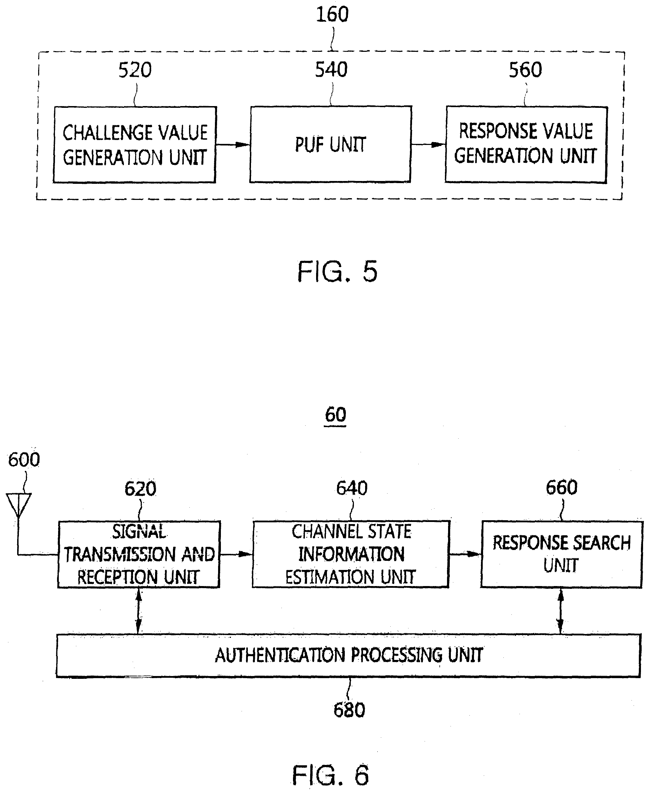

The response generation unit 160 generates a challenge value based on the state information Wi of the wireless communication channel estimated by the channel state information estimation unit 140. In this case, the response generation unit 160 acquires an output value by inputting the generated challenge value into a PUF (PUF) circuit contained therein, and generates a response value from the acquired output value. The response generation unit 160 transmits the generated response value to the authentication request unit 180. The more detailed configuration and operation of the response generation unit 160 will be described later with reference to FIG. 5.

The authentication request unit 180 requests authentication by transmitting the response value received from the response generation unit 160 to the authentication processing apparatus via the signal transmission and reception unit 120. In this case, the authentication request unit 180 may transmit the previously stored unique ID of the authentication requesting apparatus 10 to the authentication processing apparatus via the signal transmission and reception unit 120. Furthermore, the authentication request unit 180 receives authentication result information from the authentication processing apparatus via the signal transmission and reception unit 120, and determines whether authentication has been successful. In this case, if it is determined that authentication has failed, the authentication request unit 180 may determine whether to reattempt authentication and request a reattempt to perform authentication from the authentication processing apparatus.

FIG. 2 is a block diagram illustrating the configuration of the signal transmission and reception unit 120 illustrated in FIG. 1.

Referring to FIG. 2, the signal transmission and reception unit 120 includes a transmission and reception control unit 220, a transmission and reception switching unit 240, a signal transmission unit 260, and a signal reception unit 280.

The transmission and reception control unit 220 selects the signal transmission unit 260 or signal reception unit 280 by controlling the transmission and reception switching unit 240 in order to transmit and receive wireless signals at the authentication processing apparatus via the antenna 100. If the authentication requesting apparatus 10 desires to transmit a pilot signal generated by the signal transmission unit 260 and a response value generated by the response generation unit 160 to the authentication processing apparatus, the transmission and reception control unit 220 selects the signal transmission unit 260 by controlling the transmission and reception switching unit 240. Meanwhile, if the authentication requesting apparatus 10 desires to receive a pilot signal or authentication result information from the authentication processing apparatus, the transmission and reception control unit 220 selects the signal reception unit 280 by controlling the transmission and reception switching unit 240. In this case, the transmission and reception control unit 220 may switch the operating mode between transmission and reception modes in a Time Division Duplex (TTD) frame structure in which a downlink section and an uplink section are changed by controlling the transmission and reception switching unit 240 pursuant to predetermined rules.

The signal transmission unit 260 generates a pilot signal under the control of authentication request unit 180, and then transmits the pilot signal to the authentication processing apparatus via the antenna 100. Furthermore, the signal transmission unit 260 transmits a response value generated by the response generation unit 160 to the authentication processing apparatus via the antenna 100 under the control of the authentication request unit 180. In this case, the signal transmission unit 260 may transmit the unique ID of the authentication requesting apparatus 10 previously stored in the authentication request unit 180, together with a pilot signal and a response value, to the authentication processing apparatus.

The signal reception unit 280 receives a pilot signal from the authentication processing apparatus via the antenna 100, and transfers the pilot signal to the channel state information estimation unit 140. Furthermore, the signal reception unit 280 may receive authentication result information from the authentication processing apparatus via the antenna 100, and may transfer the authentication result information to the authentication request unit 180.

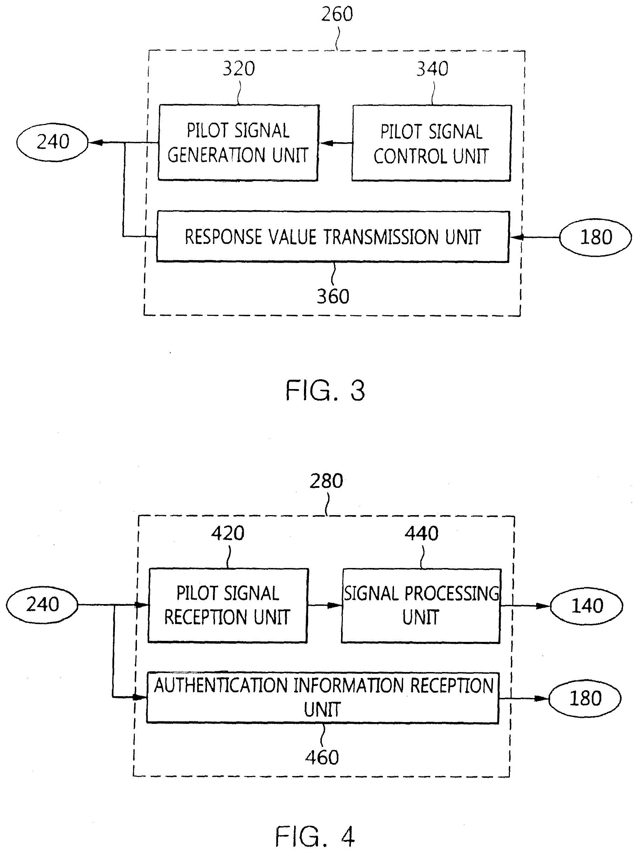

FIG. 3 is a block diagram illustrating the configuration of the signal transmission unit 260 illustrated in FIG. 2.

Referring to FIG. 3, the signal transmission unit 260 includes a pilot signal generation unit 320, a pilot signal control unit 340, and a response value transmission unit 360.

The pilot signal generation unit 320 generates a pilot signal under the control of the pilot signal control unit 340, and then transmits the pilot signal to the authentication processing apparatus via the antenna 100.

The pilot signal control unit 340 determines the pattern, power intensity or frequency band of the pilot signal that is generated by the pilot signal generation unit 320. In this case, the pattern, power intensity or frequency band of the pilot signal that is determined by the pilot signal control unit 340 is determined depending upon a wireless communication environment between the authentication requesting apparatus 10 and the authentication processing apparatus or the performance of the authentication requesting apparatus 10 and the authentication processing apparatus.

The response value transmission unit 360 transmits a response value generated by the response generation unit 160 to the authentication processing apparatus under the control of the authentication request unit 180.

FIG. 4 is a block diagram illustrating the configuration of the signal reception unit 280 illustrated in FIG. 2.

Referring to FIG. 4, the signal reception unit 280 includes a pilot signal reception unit 420, a signal processing unit 440, and an authentication information reception unit 460.

The pilot signal reception unit 420 receives a pilot signal from the authentication processing apparatus via the antenna 100, and then transfers the pilot signal to the signal processing unit 440.

The signal processing unit 440 eliminates interference and noise from the pilot signal received from the authentication processing apparatus via the pilot signal reception unit 420, and then transfers the interference and noise-free pilot signal to the channel state information estimation unit 140.

The authentication information reception unit 460 receives authentication result information from the authentication processing apparatus via the antenna 100, and then transfers the authentication result information to the authentication request unit 180.

FIG. 5 is a block diagram illustrating the configuration of the response generation unit 160 illustrated in FIG. 1.

Referring to FIG. 5, the response generation unit 160 includes a challenge value generation unit 520, a PUF unit 540, and a response value generation unit 560.

The challenge value generation unit 520 generates a challenge value from the state information $W_i$ of the wireless communication channel between the authentication requesting apparatus 10 and the authentication processing apparatus that is received from the channel state information estimation unit 140. In this case, the challenge value generation unit 520 generates a challenge value $C_i$ from the state information $W_i$ of the wireless communication channel using challenge value generation function $Q(x)$ according to the following Equation 1, and then transfers the generated challenge value $C_i$ to the PUF unit 540.

$$C_i = Q(W_i) \tag{1}$$

The PUF unit 540 contains the PUF circuit therein, and acquires an output value by inputting the challenge value $C_i$ generated by the challenge value generation unit 520 into the PUF circuit. In this case, the PUF circuit included in the PUF unit 540 has a circuit characteristic (wire delay, gate delay, optical response, etc.) unique to each authentication requesting apparatus. Accordingly, respective PUF circuits of authentication requesting apparatuses output different output values even if the same challenge value is input thereto. The PUF unit 540 generates an output value $O_i$ from the challenge value $C_i$ using characteristic function $F(x)$ based on the unique circuit characteristic of such a PUF circuit according to the following Equation 2, and then transfers the generated output value $O_i$ to the response value generation unit 560.

$$Q_i = F(C_i) \tag{2}$$

The response value generation unit 560 generates a response value from the output value $O_i$ that is generated by the PUF unit 540. In this case, the response value generation unit 560 generates a response value $P_i$ from output value $O_i$ generated by the PUF unit 540 using an arbitrary response value generation function $R(x)$ according to the following Equation 3, and then transfers the generated response value $P_i$ to the authentication request unit 180.

$$P_i = R(O_i) \tag{3}$$

The response value $P_i$ generated by the response generation unit 160 through the above-described process is transmitted to the authentication processing apparatus via the signal transmission and reception unit 120 along with the pilot signal and the unique ID of the authentication requesting apparatus 10, under the control of the authentication request unit 180. In this case, the response value $P_i$ is encrypted and then transmitted to the authentication processing apparatus. Furthermore, the signal transmission and reception unit 120 additionally transmits the hash value of the response value $P_i$ to the authentication processing apparatus, thereby enabling the authentication processing apparatus determines whether the response value $P_i$ has been correctly transmitted.

FIG. 6 is a block diagram illustrating the configuration of an authentication processing apparatus based on a PUF according to an embodiment of the present invention.

Referring to FIG. 6, the authentication processing apparatus 60 based a unclonable function according to the present invention includes an antenna 600, a signal transmission and reception unit 620, a channel state information estimation unit 640, a response search unit 660, and an authentication processing unit 680.

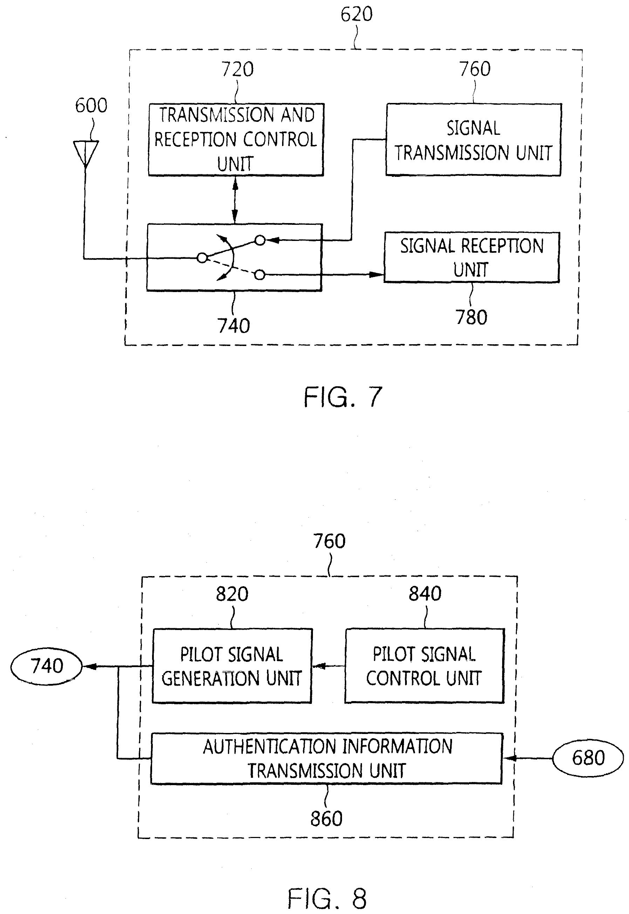

The signal transmission and reception unit 620 generates a wireless signal required for authentication and then transmits the wireless signal to the authentication requesting apparatus 10 via the antenna 600, or receives a wireless signal from the authentication requesting apparatus 10. In this case, signal transmission and reception unit 620 exchanges wireless signals with the authentication requesting apparatus 10 via the wireless communication channel. The signal transmission and reception unit 620 may receive the pilot signal, the response value $P_i$ and the unique ID of the authentication requesting apparatus 10 from the authentication requesting apparatus 10, and may then transfer them to the channel state information estimation unit 640. Furthermore, the signal transmission and reception unit 620 may generate a pilot signal under the control of the authentication processing unit 680 and then transmit the pilot signal to the authentication requesting apparatus 10, or may transmit authentication result information to the authentication requesting apparatus 10. The more detailed configuration and operation of the signal transmission and reception unit 620 will be described later with reference to FIGS. 7 to 9.

The channel state information estimation unit 640 estimates the state information of a wireless communication channel between the authentication requesting apparatus 10 and the authentication processing apparatus 60 from the pilot signal that is received from the authentication requesting apparatus 10 via the signal transmission and reception unit 620. In this case, the channel state information estimation unit 640 may acquire the state information of the wireless communication channel from the pilot signal from which interference and noise has been eliminated by the signal transmission and reception unit 620. For example, assuming that the number of wireless communication channels between the authentication requesting apparatus 10 and the authentication processing apparatus 60 is n, the channel state information estimation unit 640 estimates the state information $W_i'$ of the i-th wireless communication channel of n wireless communication channels from the pilot signal that is received from the authentication requesting apparatus 10. The authentication requesting apparatus 10 transmits the state information $W_i'$ estimated for the i-th wireless communication channel to the response search unit 660.

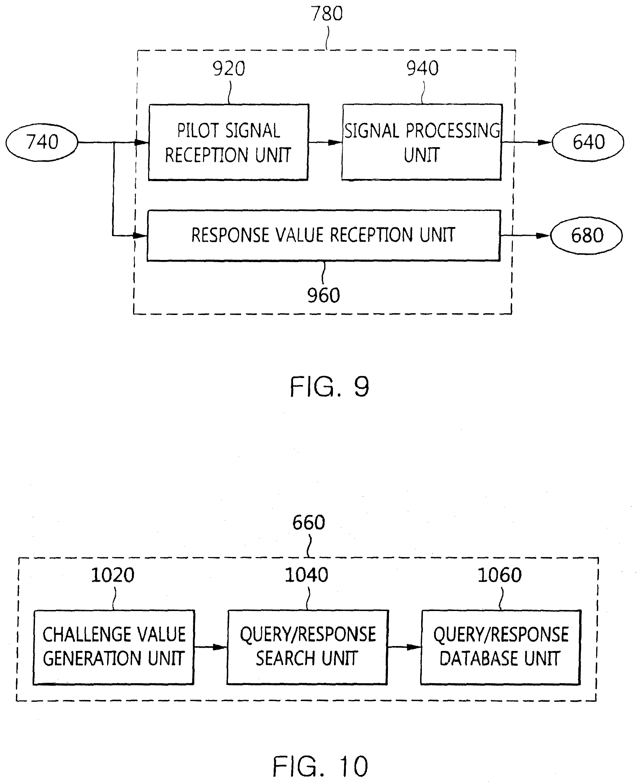

The response search unit 660 generates a challenge value based on the state information $W_i'$ of the wireless communication channel that is estimated by the channel state information estimation unit 640. Furthermore, the response search unit 660 previously stores information about mapping between reference challenge values and reference response values. The reference response values are generated for the respective reference challenge values using the PUF circuits of respective authentication requesting apparatuses. Furthermore, the response search unit 660 searches for a response value, corresponding to the challenge value generated based on the state information $W_i'$ of the wireless communication channel, using the previously stored mapping information. In this case, the response search unit 660 may extract mapping information corresponding to the authentication requesting apparatus 10 using a unique ID received from the authentication requesting apparatus 10 via the signal transmission and reception unit 620, and may search for a response value corresponding to the challenge value generated based on the pilot signal received from the authentication requesting apparatus 10 using the extracted corresponding mapping information. The response search unit 660 transmits the found response value to the authentication processing unit 680. The more detailed configuration and operation of the response search unit 660 will be described later with reference to FIG. 10.

The authentication processing unit 680 processes the authentication of the authentication requesting apparatus by comparing the response value received from the response search unit 660 with the response value received from the authentication requesting apparatus 10 via the signal transmission and reception unit 620. Furthermore, the authentication processing unit 680 may transmit authentication result information to the authentication requesting apparatus 10 via the signal transmission and reception unit 620. Meanwhile, if the authentication requesting apparatus 10 requests a reattempt to perform authentication, the authentication processing unit 680 generates a pilot signal by controlling the signal transmission and reception unit 620 and transmits the pilot signal to the authentication requesting apparatus 10, and receives a pilot signal, a response value $P_i$, and the unique ID of the authentication requesting apparatus 10 from the authentication requesting apparatus.

FIG. 7 is a block diagram illustrating the configuration of the signal transmission and reception unit 620 illustrated in FIG. 6.

Referring to FIG. 7, the signal transmission and reception unit 620 includes a transmission and reception control unit 720, a transmission and reception switching unit 740, a signal transmission unit 760, and a signal reception unit 780.

In order to transmit and receive wireless signals at the authentication requesting apparatus 10 via the antenna 600, the transmission and reception control unit 720 selects the signal transmission unit 760 or signal reception unit 780 by controlling the transmission and reception switching unit 740. If the authentication processing apparatus 60 desires to transmit the pilot signal generated by the signal transmission unit 760 to the authentication requesting apparatus 10 or to transmit the authentication result information, the transmission and reception control unit 720 selects the signal transmission unit 760 by controlling the transmission and reception switching unit 740. Meanwhile, if the authentication processing apparatus 60 desires to receive a pilot signal, a response value $P_i$ and the unique ID of the authentication requesting apparatus 10 from the authentication requesting apparatus 10, the transmission and reception control unit 720 selects the signal reception unit 780 by controlling the transmission and reception switching unit 740. In this case, the transmission and reception control unit 720 may switch the operating mode between transmission and reception modes by controlling the transmission and reception switching unit 740 in a TTD frame structure in which downlink and uplink sections are changed pursuant to predetermined rules.

In response to a request for a reattempt to perform authentication from the authentication requesting apparatus 10, the signal transmission unit 760 generates a pilot signal, and then transmits the generated pilot signal to the authentication requesting apparatus 10 via the antenna 600. Furthermore, the signal transmission unit 760 transmits authentication result information to the authentication requesting apparatus 10 via the antenna 600 under the control of the authentication processing unit 680. In this case, it is preferred that the pilot signal generated by the signal transmission unit 760 have the same characteristics (pattern, power intensity, frequency band, etc.) as the pilot signal generated by the signal transmission unit 260 of the authentication requesting apparatus 10.

The signal reception unit 780 receives a pilot signal and the unique ID of the authentication requesting apparatus 10 from the authentication requesting apparatus 10 antenna 600, and transfers them to the channel state information estimation unit 640. Furthermore, the signal reception unit 780 may receive a response value $P_i$ from the authentication requesting apparatus 10 via the antenna 600, and may then transfer them to the authentication processing unit 680.

FIG. 8 is a block diagram illustrating the configuration of the signal transmission unit 760 illustrated in FIG. 7.

Referring to FIG. 8, the signal transmission unit 760 includes a pilot signal generation unit 820, a pilot signal control unit 840, and an authentication information transmission unit 860.

The pilot signal generation unit 820 generates a pilot signal under the control of the pilot signal control unit 840, and then transmits the generated pilot signal to the authentication requesting apparatus 10 via the antenna 600. In this case, it is preferred that the pilot signal generated by the pilot signal generation unit 820 have the same characteristics (pattern, power intensity, frequency band, etc.) as the pilot signal generated by the pilot signal generation unit 320 of the authentication requesting apparatus 10.

The pilot signal control unit 840 determines the pattern, power intensity or frequency band of the pilot signal that is generated by the pilot signal generation unit 820. In this case, the pattern, power intensity and frequency band of the pilot signal determined by the pilot signal control unit 840 may be determined to be the same as the pattern, power intensity and frequency band of the pilot signal generated by the pilot signal generation unit 320 of the authentication requesting apparatus 10.

The authentication information transmission unit 860 generates a signal indicative of authentication result information and then transmits the signal to the authentication requesting apparatus 10 via the antenna 600 under the control of the authentication processing unit 680.

FIG. 9 is a block diagram illustrating the configuration of the signal reception unit 780 illustrated in FIG. 7.

Referring to FIG. 9, the signal reception unit 780 includes a pilot signal reception unit 920, a signal processing unit 940, and a response value reception unit 960.

The pilot signal reception unit 920 receives a pilot signal from the authentication requesting apparatus 10 via the antenna 600, and then transfers the received pilot signal to the signal processing unit 940.

The signal processing unit 940 eliminates interference and noise from the pilot signal received from the authentication requesting apparatus 10 via the pilot signal reception unit 920, and then transfers the interference and noise-free pilot signal to the channel state information estimation unit 640.

The response value reception unit 960 receives a response value $P_i$ from the authentication requesting apparatus 10 via the antenna 600, and then transfers the received response value $P_i$ to the authentication processing unit 680.

FIG. 10 is a block diagram illustrating the configuration of the response search unit 660 illustrated in FIG. 6.

Referring to FIG. 10, the response search unit 660 includes a challenge value generation unit 1020, a query/response search unit 1040, and a query/response database unit 1060.

The challenge value generation unit 1020 generates a challenge value from the state information $W_i'$ of a wireless communication channel between the authentication requesting apparatus 10 and the authentication processing apparatus 60, which is received from the channel state information estimation unit 640. In this case, the challenge value generation unit 520 generates a challenge value $C_i'$ from the state information $W_i'$ of the wireless communication channel using a challenge value generation function Q(x) according to the following Equation 4, and then transfers the generated challenge value $C_i'$ to the query/response search unit 1040.

$$C_i' = Q(W_i') \qquad (4)$$

In this case, since the channel state information estimation unit 140 of the authentication requesting apparatus 10 and the channel state information estimation unit 640 of the authentication processing apparatus 60 measure the state of the same wireless communication channel, the challenge value $C_i'$ generated by the challenge value generation unit 1020 has the same value as the challenge value $C_i$ generated by the challenge value generation unit 520 of the authentication requesting apparatus 10.

The query/response search unit 1040 searches for a response value corresponding to the challenge value $C_i'$, generated by the challenge value generation unit 520, from information about mapping between reference challenge values and reference response values, which is stored in the query/response database unit 1060. That is, the query/response search unit 1040 searches for a response value $P_i'$ corresponding to the challenge value $C_i'$ from mapping information, corresponding to a unique ID transmitted by the authentication requesting apparatus 10 that attempts authentication, using the unique ID received from the authentication requesting apparatus 10 via the signal transmission and reception unit 620, the challenge value $C_i'$ generated by the challenge value generation unit 520, and a search function S(x, y), according to the following Equation 5. The mapping information is selected from mapping information for a plurality of authentication requesting apparatus, which is previously stored in the query/response database unit 1060. In this case, the query/response search unit 1040 provides the found response value $P_i'$ to the authentication processing unit 680.

$$P_i' = S(C_i', ID) \qquad (5)$$

The query/response database unit 1060 previously stores information about mapping between reference challenge values and reference response values that are generated for the respective reference challenge values by authentication requesting apparatuses 10 using PUF circuits. In this case, the information about mapping between challenge values and reference response values for a plurality of authentication requesting apparatuses may be stored in the query/response database unit 1060. The query/response database unit 1060 may manage the unique IDs of the authentication requesting apparatuses and the information about mapping between reference challenge values and reference response values so that they are associated with each other.

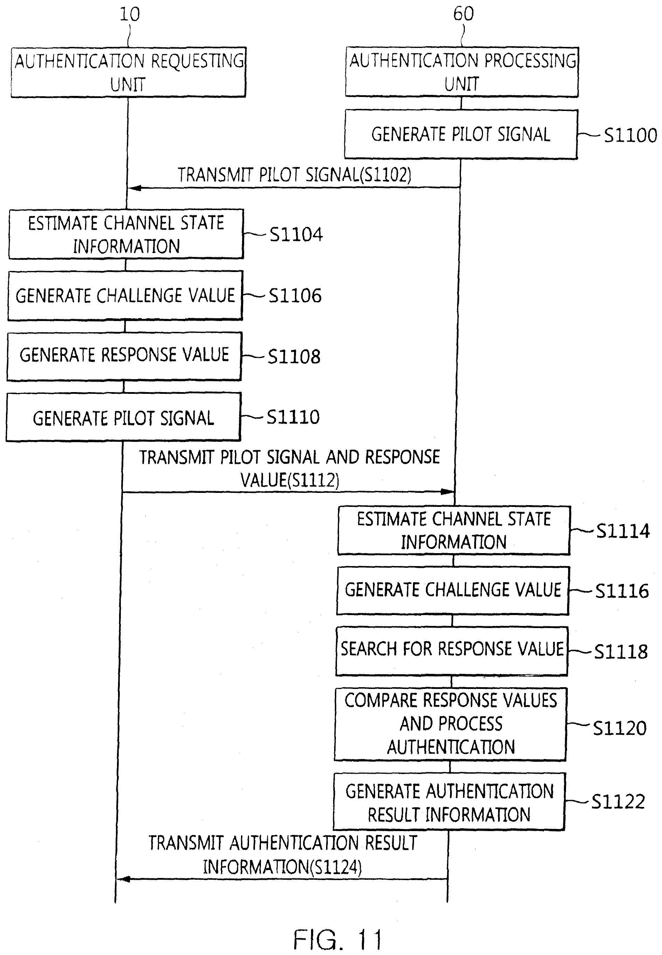

A method for performing authentication between the authentication requesting apparatus 10 and the authentication processing apparatus 60 according to the present invention will be described with reference to FIGS. 11 to 13. In the following description, descriptions that are identical to descriptions of the operations of the authentication requesting apparatus 10 and the authentication processing apparatus 60 according to the present invention, which have been already given in conjunction with FIGS. 1 to 10, will be omitted.

FIG. 11 is a flowchart illustrating an authentication execution method based on a PUF according to the present invention.

Referring to FIG. 11, in the authentication execution method based on a PUF according to the present invention, first, frame synchronization between the signal transmission and reception units 120 and 620 of the authentication requesting apparatus 10 and the authentication processing apparatus 60 using a single antenna or multiple antennas is performed as an initial process for performing authentication. Thereafter, in response to a request for an attempt to perform authentication from the authentication requesting apparatus 10, the authentication processing apparatus 60 generates a first pilot signal at step S1100, and transmits the generated first pilot signal to the authentication requesting apparatus 10 at step S1102.

Thereafter, the authentication requesting apparatus 10 eliminates interference and noise from the first pilot signal received from the authentication processing apparatus 60 and then estimates the state information $W_i$ of a wireless communication channel between the authentication requesting apparatus 10 and the authentication processing apparatus 60 at step S1104, and then generates a first challenge value $C_i$ based on the estimated state information $W_i$ of the wireless communication channel at step S1106. Thereafter, the authentication requesting apparatus 10 acquires an output value $O_i$ by inputting a first challenge value $C_i$ generated at step S1106 into the PUF circuit, and then generates the acquired output value $O_i$ from the first response value $P_i$ at step S1108.

Thereafter, the authentication requesting apparatus 10 generates a second pilot signal via the signal transmission and reception unit 120 at step S1110, and transmits the second pilot signal generated at step S1110 and the first response value $P_i$ generated at step S1108 to the authentication processing apparatus 60 at step S1112. In this case, the authentication requesting apparatus 10 may transmit its own unique ID, together with the second pilot signal and the first response value $P_i$, to the authentication processing apparatus 60.

Meanwhile, the authentication processing apparatus 60 receives the second pilot signal, the first response value $P_i$ and the unique ID from the authentication requesting apparatus 10, and eliminates interference and noise from the second pilot signal and then estimates the state information $W_i'$ of a wireless communication channel between the authentication requesting apparatus 10 and the authentication processing apparatus 60 at step S1114. Furthermore, the authentication processing apparatus 60 generates a second challenge value $C_i'$ based on the estimated state information $W_i'$ of the wireless communication channel at step S1116, and searches for a second response value $P_i'$ corresponding to the second challenge value $C_i'$ from information about mapping between reference challenge values and reference response values generated for the respective reference challenge values using PUF circuits of the authentication requesting apparatuses at step S1118. In this case, the authentication processing apparatus 60 may search a second response value $P_i'$ corresponding to the second challenge value $C_i'$ from the mapping information corresponding to the unique ID using the unique ID received at step S1114.

Thereafter, the authentication processing apparatus 60 processes the authentication of the authentication requesting apparatus 10 by comparing the first response value $P_i$ received from the authentication requesting apparatus 10 at step S1114 with the second response value $P_i'$ found at step S1118, at step S1120, generates authentication result information at step S1122, and transmits the generated authentication result information to the authentication requesting apparatus 10 via the signal transmission and reception unit 620 at step S1124.

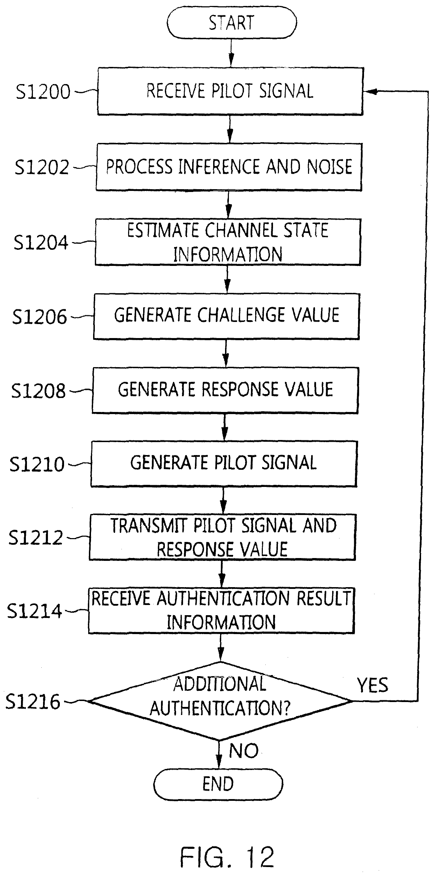

FIG. 12 is a flowchart illustrating the operation of the authentication requesting apparatus 10 in the authentication execution method based on a PUF according to the present invention.

Referring to FIG. 12, the authentication requesting apparatus 10 receives a first pilot signal from the authentication processing apparatus 60 at step S1200, and eliminates interference and noise from the received first pilot signal at step S1202.

Thereafter, the authentication requesting apparatus 10 estimates the state information $W_i$ of a wireless communication channel between the authentication requesting apparatus 10 and the authentication processing apparatus 60 from the first pilot signal, from which interference and noise has been eliminated at step S1202, at step S1204, and generates a first challenge value $C_i$ from the estimated state information $W_i$ of the wireless communication channel at step S1206.

Thereafter, the authentication requesting apparatus 10 acquires an output value $O_i$ by inputting the first challenge value $C_i$ generated at step S1206 into the PUF circuit provided in the PUF unit 540, and then generates a first response value $P_i$ from the acquired output value $O_i$ at step S1208.

Thereafter, the authentication requesting apparatus 10 generates a second pilot signal at step S1210, and requests authentication by transmitting the generated second pilot signal, together with the first response value $P_i$ generated at step S1208, to the authentication processing apparatus 60 at step S1212. In this case, the authentication requesting apparatus 10 may transmit its own unique ID, together with the second pilot signal and the first response value $P_i$, to the authentication processing apparatus 60.

Meanwhile, the authentication processing apparatus 60 processes the authentication of the authentication requesting apparatus 10 using the second pilot signal, the first response value $P_i$ and the unique ID transmitted at step S1212, and transmits authentication result information to the authentication requesting apparatus 10 and the authentication requesting apparatus 10 receives the authentication result information at step S1214.

Thereafter, the authentication requesting apparatus 10 analyzes the authentication result information received at step S1214 and determines whether to reattempt authentication if the authentication has failed at step S1216.

If, as a result the determination at step S1216, it is determined that the authentication has failed, the authentication requesting apparatus 10 requests a reattempt to perform authentication from the authentication processing apparatus 60, and thus steps S1200 to S1216 are repeated. In contrast, if it is determined that the authentication has been successful, the authentication request procedure is terminated.

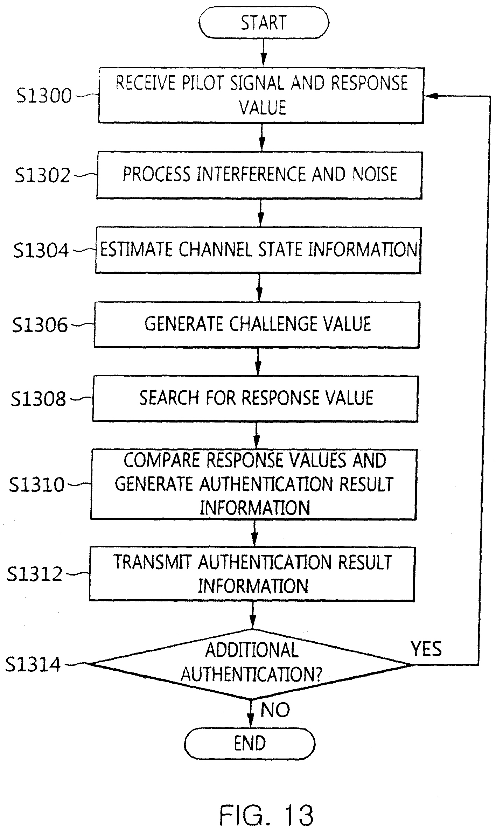

FIG. 13 is a flowchart illustrating the operation of the authentication processing apparatus 60 in the authentication execution method based on a PUF according to the present invention.

Referring to FIG. 13, the authentication processing apparatus 60 first receives a second pilot signal and a first response value $P_i$ from the authentication requesting apparatus 10 at step S1300. In this case, the authentication processing apparatus 60 may receive the unique ID of the authentication requesting apparatus 10 from the authentication requesting apparatus 10.

Thereafter, the authentication processing apparatus 60 eliminates interference and noise from the second pilot signal received from the authentication requesting apparatus 10 at step S1302, and estimates the state information $W_i'$ of a wireless communication channel between the authentication requesting apparatus 10 and the authentication processing apparatus 60 from the second pilot signal from which interference and noise has been eliminated at step S1304.

Thereafter, the authentication processing apparatus 60 generates a second challenge value $C_i'$ from the estimated state information $W_i'$ of the wireless communication channel at step S1306, and searches for a second response value $P_i'$ corresponding to the second challenge value $C_i'$ using information about mapping between reference challenge values and reference response values previously stored in the query/response database unit 1060 at step S1308.

Thereafter, the authentication processing apparatus 60 processes the authentication of the authentication requesting apparatus 10 by comparing the first response value $P_i$ received from the authentication requesting apparatus 10 at step S1300 with the second response value $P_i'$ found at step S1308 and then generates authentication result information at step S1310.

Meanwhile, the authentication processing apparatus 60 transmits the authentication result information generated at step S1310 to the authentication requesting apparatus 10 at step S1314, and determines whether to perform additional authentication depending on whether a reattempt to perform authentication has been requested by the authentication requesting apparatus 10 that has received the authentication result information at step S1314.

If, as a result of the determination at step S1314, it is determined that additional authentication needs to be performed, steps S1300 to S1314 are performed again. If it is determined that additional authentication does not need to be performed, the authentication processing procedure is terminated.

The present invention is advantageous in that, during an authentication procedure using a PUF, a pair of challenge and response values can be prevented from being divulged to the outside and a challenge value input to a function of a PUF can be randomly generated via the state information of a wireless communication channel.

Furthermore, the present invention is advantageous in that the same challenge value can be acquired using a pilot signal that is used by a verifier and a claimant to perform wireless communication without requiring the exchange of additional information.

Furthermore, the present invention is advantageous in that a challenge value used for authentication is generated based on the state information of a wireless communication channel that can be acquired only by a verifier and a claimant, and thus an external hacker cannot acquire information about the challenge value extracted from the state information of the wireless communication channel even though he or she acquires a response value via hacking, thereby preventing him or her from becoming aware of information about a pair of challenge and response values.

**Claims**

1. An authentication requesting apparatus (10) based on a physically unclonable function, PUF, comprising:

   a signal transmission and reception unit (120) configured to receive a first pilot signal from an authentication processing apparatus (60) that processes authentication;
   a response generation unit (160) configured to generate a challenge value based on the first pilot signal, to acquire an output value by inputting the challenge value into a PUF circuit (540), and to generate a response value from the output value; and
   an authentication request unit (180) configured to request authentication by transmitting the response value to the authentication processing apparatus (60), to receive authentication result information from the authentication processing apparatus (60), and to determine whether authentication has been successful,
   the authentication requesting apparatus (10) further comprising a channel state information estimation unit (140) configured to estimate state information of a communication channel between the authentication requesting apparatus (10) and the authentication processing apparatus (60) from the first pilot signal;
   wherein the response generation unit (160) generates the challenge value from the state information of the communication channel.

2. The authentication requesting apparatus (10) of claim 1, wherein the signal transmission and reception unit (120) includes a signal transmission unit (260) configured to generate a second pilot signal, and to transmit a unique ID of the authentication requesting apparatus (10), the second pilot signal, and the response value to the authentication processing apparatus (60).

3. The authentication requesting apparatus (10) of claim 1, wherein the signal transmission and reception unit (120) includes a signal reception unit (280) configured to receive the first pilot signal and the authentication result information from the authentication processing apparatus (60).

4. An authentication processing apparatus (60) based on a PUF, comprising:

a signal transmission and reception unit (620) configured to transmit a first pilot signal to an authentication requesting apparatus (10) that requests authentication, and to receive a response value for the first pilot signal and a second pilot signal from the authentication requesting apparatus (10);
a response search unit (660) configured to generate a challenge value based on the second pilot signal, to store information about mapping between reference challenge values and reference response values generated for respective reference challenge values using PUF circuits of authentication requesting apparatuses (10), and to search for a response value corresponding to the challenge value from the mapping information; and
an authentication processing unit (680) configured to process authentication of the authentication requesting apparatus (10) by comparing a response value received from the authentication requesting apparatus (10) with the response value found by the response search unit (660), and to transmit authentication result information to the authentication requesting apparatus (10),
the authentication processing apparatus (60) further comprising a channel state information estimation unit (640) configured to estimate state information of a communication channel between the authentication requesting apparatus (10) and the authentication processing apparatus (60) from the second pilot signal;
wherein the response search unit (660) generates the challenge value based on the state information of the communication channel.

5. The authentication processing apparatus (60) of claim 4, wherein the signal transmission and reception unit (620) includes a signal transmission unit (760) configured to generate the first pilot signal, and to transmit the first pilot signal and the authentication result information to the authentication requesting apparatus (10).

6. The authentication processing apparatus (60) of claim 4, wherein the signal transmission and reception unit (620) includes a signal reception unit (780) configured to receive a unique ID of the authentication requesting apparatus (10), a response value for the first pilot signal, and the second pilot signal from the authentication requesting apparatus (10).

7. The authentication processing apparatus (60) of claim 6, wherein the response search unit (660) searches for a response value corresponding to the challenge value from mapping information corresponding to the unique ID.

8. An authentication execution method based on a PUF, comprising;

generating, by an authentication requesting apparatus, a first challenge value (S1106) based on a first pilot signal received from an authentication processing apparatus (S1102);
generating, by the authentication requesting apparatus, a first response value (S1108) from an output value acquired by inputting the first challenge value into a PUF circuit;
generating, by the authentication requesting apparatus, a second pilot signal (S1110), and transmitting, by the authentication requesting apparatus, the second pilot signal, together with the first response value (S1112), to the authentication processing apparatus;
generating, by the authentication processing apparatus, a second challenge value (S1116) based on the second pilot signal received from the authentication requesting apparatus;
searching, by the authentication processing apparatus, for a second response value (S1118) corresponding to the second challenge value from information about mapping between reference challenge values and reference response values generated for the respective reference challenge values by authentication requesting apparatuses using PUF circuits; and
processing, by the authentication processing apparatus, authentication of the authentication requesting apparatus by comparing the first response value with the second response value (S1120), and transmitting, by the authentication processing apparatus, authentication result information (S1124) to the authentication requesting apparatus,

wherein generating the first challenge value (S1106) based on the first pilot signal includes:

estimating state information of the wireless communication channel (S1104) between the authentication requesting apparatus and the authentication processing apparatus from the first pilot signal step; and generating the first challenge value (S1106) from the state information of the wireless communication channel estimated from the first pilot signal.

9. The authentication execution method of claim 8, wherein generating the second challenge value (S1116) based on the second pilot signal includes:

estimating the state information of the wireless communication channel (S1114) between the authentication requesting apparatus and the authentication processing apparatus from the second pilot signal; and generating the second challenge value (S1116) from the state information of the wireless communication channel estimated from the second pilot signal.

10. The authentication execution method of claim 8, wherein generating the second pilot signal (S1110) and transmitting the second pilot signal, together with the first response value (S1112), to the authentication processing apparatus includes:
transmitting a unique ID of the authentication requesting apparatus to the authentication processing apparatus.

11. The authentication execution method of claim 10, wherein searching for the second response value (S1118) corresponding to the second challenge value includes:
searching for the second response value (S1118) corresponding to the second challenge value from mapping information corresponding to the unique ID.


**Patentansprüche**

1. Authentifizierungsanforderungsvorrichtung (10), die auf einer physikalisch nicht nachzubildenden Funktion, PUF, beruht und die umfasst:

eine Signalsende- und Signalempfangseinheit (120), die konfiguriert ist, ein erstes Pilotsignal von einer Authentifizierungsverarbeitungsvorrichtung (60), die eine Authentifizierung verarbeitet, zu empfangen; eine Antworterzeugungseinheit (160), die konfiguriert ist, einen Abfragewert anhand des ersten Pilotsignals zu erzeugen, um einen Ausgabewert durch Eingeben des Abfragewerts in eine PUF-Schaltung (540) zu erlangen und einen Antwortwert aus dem Ausgabewert zu erzeugen; und eine Authentifizierungsanforderungseinheit (180), die konfiguriert ist, eine Authentifizierung durch Senden des Antwortwerts an die Authentifizierungsverarbeitungsvorrichtung (60) anzufordern, Authentifizierungsergebnisinformationen von der Authentifizierungsverarbeitungsvorrichtung (60) zu empfangen und zu bestimmen, ob die Authentifizierung erfolgreich war, wobei die Authentifizierungsanforderungsvorrichtung (10) ferner eine Kanalzustandsinformationenschätzeinheit (140) umfasst, die konfiguriert ist, Zustandsinformationen eines Kommunikationskanals zwischen der Authentifizierungsanforderungsvorrichtung (10) und der Authentifizierungsverarbeitungsvorrichtung (60) aus dem ersten Pilotsignal zu schätzen; wobei die Antworterzeugungseinheit (160) den Abfragewert aus den Zustandsinformationen des Kommunikationskanals erzeugt.

2. Authentifizierungsanforderungsvorrichtung (10) nach Anspruch 1, wobei die Signalsende- und Signalempfangseinheit (120) eine Signalsendeeinheit (260) enthält, die konfiguriert ist, ein zweites Pilotsignal zu erzeugen, und eine eindeutige ID der Authentifizierungsanforderungsvorrichtung (10), das zweite Pilotsignal und den Antwortwert an die Authentifizierungsverarbeitungsvorrichtung (60) zu senden.

3. Authentifizierungsanforderungsvorrichtung (10) nach Anspruch 1, wobei die Signalsende- und Signalempfangseinheit (120) eine Signalempfangseinheit (280) enthält, die konfiguriert ist, das erste Pilotsignal und die Authentifizierungsergebnisinformationen von der Authentifizierungsverarbeitungsvorrichtung (60) zu empfangen.

4. Authentifizierungsverarbeitungsvorrichtung (60), die auf einer PUF beruht und die umfasst:

eine Signalsende- und Signalempfangseinheit (620), die konfiguriert ist, ein erstes Pilotsignal an eine Authentifizierungsanforderungsvorrichtung (10), die eine Authentifizierung anfordert, zu senden und einen Antwortwert für das erste Pilotsignal und ein zweites Pilotsignal von der Authentifizierungsanforderungsvorrichtung (10) zu empfangen;

eine Antwortsucheinheit (660), die konfiguriert ist, einen Abfragewert anhand des zweiten Pilotsignals zu erzeugen, Informationen über eine Abbildung zwischen Referenzabfragewerten und Referenzantwortwerten, die für jeweilige Referenzabfragewerte unter Verwendung von PUF-Schaltungen von Authentifizierungsanforderungsvorrichtungen (10) erzeugt werden, zu speichern und nach einem Antwortwert, der dem Abfragewert entspricht, aus den Abbildungsinformationen zu suchen; und

eine Authentifizierungsverarbeitungsvorrichtung (680), die konfiguriert ist, eine Authentifizierung der Authentifizierungsanforderungsvorrichtung (10) durch Vergleichen eines von der Authentifizierungsanforderungsvorrichtung (10) empfangenen Antwortwerts mit dem durch die Antwortsucheinheit (660) gefundenen Antwortwert zu verarbeiten und Authentifizierungsergebnisinformationen an die Authentifizierungsanforderungsvorrichtung (10) zu senden,

wobei die Authentifizierungsverarbeitungsvorrichtung (60) ferner eine Kanalzustandsinformationenschätzeinheit (640) umfasst, die konfiguriert ist, Zustandsinformationen eines Kommunikationskanals zwischen der Authentifizierungsanforderungsvorrichtung (10) und der Authentifizierungsverarbeitungsvorrichtung (60) aus dem zweiten Pilotsignal zu schätzen;

wobei die Antwortsucheinheit (660) den Abfragewert anhand der Zustandsinformationen des Kommunikationskanals erzeugt.

5. Authentifizierungsverarbeitungsvorrichtung (60) nach Anspruch 4, wobei die Signalsende- und Signalempfangseinheit (620) eine Signalsendeeinheit (760) enthält, die konfiguriert ist, das erste Pilotsignal zu erzeugen und das erste Pilotsignal und die Authentifizierungsergebnisinformationen an die Authentifizierungsanforderungsvorrichtung (10) zu senden.

6. Authentifizierungsverarbeitungsvorrichtung (60) nach Anspruch 4, wobei die Signalsende- und Signalempfangseinheit (620) eine Signalempfangseinheit (780) enthält, die konfiguriert ist, eine eindeutige ID der Authentifizierungsanforderungsvorrichtung (10) und einen Antwortwert für das erste Pilotsignal und das zweite Pilotsignal von der Authentifizierungsanforderungsvorrichtung (10) zu empfangen.

7. Authentifizierungsverarbeitungsvorrichtung (60) nach Anspruch 6, wobei die Antwortsucheinheit (660) nach einem Antwortwert, der dem Abfragewert entspricht, aus den Abbildungsinformationen, die der eindeutigen ID entsprechen, sucht.

8. Authentifizierungsausführungsverfahren, das auf einer PUF beruht und umfasst:

Erzeugen durch eine Authentifizierungsanforderungsvorrichtung eines ersten Abfragewerts (S1106) anhand eines von einer Authentifizierungsverarbeitungsvorrichtung (S1102) empfangenen ersten Pilotsignals;

Erzeugen durch die Authentifizierungsanforderungsvorrichtung eines ersten Antwortwerts (S1108) aus einem Ausgabewert, der durch Eingeben des ersten Abfragewerts in eine PUF-Schaltung erfasst wird;

Erzeugen durch die Authentifizierungsanforderungsvorrichtung eines zweiten Pilotsignals (S1110) und Senden durch die Authentifizierungsanforderungsvorrichtung des zweiten Pilotsignals zusammen mit dem ersten Antwortwert (S1112) an die Authentifizierungsverarbeitungsvorrichtung;

Erzeugen durch die Authentifizierungsverarbeitungsvorrichtung eines zweiten Abfragewerts (S1116) anhand des von der Authentifizierungsanforderungsvorrichtung empfangenen zweiten Pilotsignals;

Suchen durch die Authentifizierungsverarbeitungsvorrichtung nach einem zweiten Antwortwert (S1118), der dem zweiten Abfragewert entspricht, aus Informationen über eine Abbildung zwischen Referenzabfragewerten und Referenzantwortwerten, die für die jeweiligen Referenzabfragewerte durch Authentifizierungsanforderungsvorrichtungen, die PUF-Schaltungen verwenden, erzeugt werden; und

Verarbeiten durch die Authentifizierungsverarbeitungsvorrichtung einer Authentifizierung der Authentifizierungsanforderungsvorrichtung durch Vergleichen des ersten Antwortwerts mit dem zweiten Antwortwert (S1120) und Senden durch die Authentifizierungsverarbeitungsvorrichtung von Authentifizierungsergebnisinformationen (S1124) an die Authentifizierungsanforderungsvorrichtung,

wobei das Erzeugen des ersten Abfragewerts (S1106) anhand des ersten Pilotsignals enthält:

Schätzen von Zustandsinformationen des drahtlosen Kommunikationskanals (S1104) zwischen der Authentifizierungsanforderungsvorrichtung und der Authentifizierungsverarbeitungsvorrichtung aus dem ersten Pilotsignalschritt; und

Erzeugen des ersten Abfragewerts (S1106) aus den aus dem ersten Pilotsignal geschätzten Zustandsinformationen des drahtlosen Kommunikationskanals.

9. Authentifizierungsausführungsverfahren nach Anspruch 8, wobei das Erzeugen des zweiten Abfragewerts (S1116) anhand des zweiten Pilotsignals enthält:

Schätzen der Zustandsinformationen des drahtlosen Kommunikationskanals (S1114) zwischen der Authentifizierungsanforderungsvorrichtung und der Authentifizierungsverarbeitungsvorrichtung aus dem zweiten Pilotsignal; und

Erzeugen des zweiten Abfragewerts (S1116) aus den aus dem zweiten Pilotsignal geschätzten Zustandsinformationen des drahtlosen Kommunikationskanals.

10. Authentifizierungsausführungsverfahren nach Anspruch 8, wobei das Erzeugen des zweiten Pilotsignals (S1110) und das Senden des zweiten Pilotsignals zusammen mit dem ersten Antwortwert (S1112) an die Authentifizierungsverarbeitungsvorrichtung enthält:

Senden einer eindeutigen ID der Authentifizierungsanforderungsvorrichtung an die Authentifizierungsverarbeitungsvorrichtung.

11. Authentifizierungsausführungsverfahren nach Anspruch 10, wobei das Suchen nach dem zweiten Antwortwert (S1118), der dem zweiten Abfragewert entspricht, enthält:

Suchen nach dem zweiten Antwortwert (S1118), der dem zweiten Abfragewert entspricht, aus den Abbildungsinformationen, die der eindeutigen ID entsprechen.

## Revendications

1. Appareil de demande d'authentification (10) basé sur une fonction physique inclonable, PUF, comprenant :

une unité de transmission et de réception de signal (120) configurée pour recevoir un premier signal pilote en provenance d'un appareil de traitement d'authentification (60) qui traite l'authentification ;

une unité de génération de réponse (160) configurée pour générer une valeur de demande basée sur le premier signal pilote, pour acquérir une valeur de sortie en entrant la valeur de demande dans un circuit PUF (540), et pour générer une valeur de réponse à partir de la valeur de sortie ; et

une unité de demande d'authentification (180) configurée pour demander une authentification en transmettant la valeur de réponse à l'appareil de traitement d'authentification (60), pour recevoir des informations de résultat d'authentification en provenance de l'appareil de traitement d'authentification (60), et pour déterminer si l'authentification a abouti,

l'appareil de demande d'authentification (10) comprenant en outre une unité d'estimation d'informations d'état de canal (140) configurée pour estimer des informations d'état d'un canal de communication entre l'appareil de demande d'authentification (10) et l'appareil de traitement d'authentification (60) à partir du premier signal pilote ;

dans lequel l'unité de génération de réponse (160) génère la valeur de demande à partir des informations d'état du canal de communication.

2. Appareil de demande d'authentification (10) selon la revendication 1, dans lequel l'unité de transmission et de réception de signal (120) comporte une unité de transmission de signal (260) configurée pour générer un second signal pilote, et pour transmettre un identifiant propre de l'appareil de demande d'authentification (10), le second signal pilote, et la valeur de réponse à l'appareil de traitement d'authentification (60).

3. Appareil de demande d'authentification (10) selon la revendication 1, dans lequel l'unité de transmission et de réception de signal (120) comporte une unité de réception de signal (280) configurée pour recevoir le premier signal pilote et les informations de résultat d'authentification en provenance de l'appareil de traitement d'authentification (60).

4. Appareil de traitement d'authentification (60) basé sur une PUF, comprenant :

une unité de transmission et de réception de signal (620) configurée pour transmettre un premier signal pilote à un appareil de demande d'authentification (10) qui demande une authentification, et pour recevoir une valeur de réponse pour le premier signal pilote et un second signal pilote en provenance de l'appareil de demande d'authentification (10) ;

une unité de recherche de réponse (660) configurée pour générer une valeur de demande basée sur le second signal pilote, pour stocker des informations concernant une mise en correspondance entre des valeurs de demande de référence et des valeurs de réponse de référence générées pour des valeurs de demande de référence respectives à l'aide de circuits PUF d'appareils de demande d'authentification (10), et pour rechercher une valeur de réponse correspondant à la valeur de demande à partir des informations de mise en correspondance ; et

une unité de traitement d'authentification (680) configurée pour traiter l'authentification de l'appareil de demande d'authentification (10) en comparant une valeur de réponse reçue en provenance de l'appareil de demande d'authentification (10) avec la valeur de réponse trouvée par l'unité de recherche de réponse (660), et pour transmettre des informations de résultat d'authentification à l'appareil de demande d'authentification (10),

l'appareil de traitement d'authentification (60) comprenant en outre une unité d'estimation d'informations d'état de canal (640) configurée pour estimer des informations d'état d'un canal de communication entre l'appareil de demande d'authentification (10) et l'appareil de traitement d'authentification (60) à partir du second signal pilote ;

dans lequel l'unité de recherche de réponse (660) génère la valeur de demande basée sur les informations d'état du canal de communication.

5. Appareil de traitement d'authentification (60) selon la revendication 4, dans lequel l'unité de transmission et de réception de signal (620) comporte une unité de transmission de signal (760) configurée pour générer le premier signal pilote, et pour transmettre le premier signal pilote et les informations de résultat d'authentification à l'appareil de demande d'authentification (10).

6. Appareil de traitement d'authentification (60) selon la revendication 4, dans lequel l'unité de transmission et de réception de signal (620) comporte une unité de réception de signal (780) configurée pour recevoir un identifiant propre de l'appareil de demande d'authentification (10), une valeur de réponse pour le premier signal pilote, et le second signal pilote en provenance de l'appareil de demande d'authentification (10).

7. Appareil de traitement d'authentification (60) selon la revendication 6, dans lequel l'unité de recherche de réponse (660) recherche une valeur de réponses correspondant à la valeur de demande à partir d'informations de mise en correspondance correspondant à l'identifiant propre.

8. Procédé d'exécution d'authentification basé sur une PUF, comprenant :

la génération, par un appareil de demande d'authentification, d'une première valeur de demande (S1106) basée sur un premier signal pilote reçu en provenance d'un appareil de traitement d'authentification (S1102) ;

la génération, par l'appareil de demande d'authentification, d'une première valeur de réponse (S1108) à partir d'une valeur de sortie acquise en entrant la première valeur de demande dans un circuit PUF ;

la génération, par l'appareil de demande d'authentification, d'un second signal pilote (S1110), et la transmission, par l'appareil de demande d'authentification, du second signal pilote, conjointement à la première valeur de réponse (S1112), à l'appareil de traitement d'authentification ;

la génération, par l'appareil de traitement d'authentification, d'une seconde valeur de demande (S1116) basée sur le second signal pilote reçu en provenance de l'appareil de demande d'authentification ;

la recherche, par l'appareil de traitement d'authentification, d'une seconde valeur de réponse (S1118) correspondant à la seconde valeur de demande à partir d'informations concernant une mise en correspondance entre des valeurs de demande de référence et des valeurs de réponse de référence générées pour les valeurs de demande de référence respectives par les appareils de demande d'authentification à l'aide de circuits PUF ; et

le traitement, par l'appareil de traitement d'authentification, de l'authentification de l'appareil de demande d'authentification en comparant la première valeur de réponse avec la seconde valeur de réponse (S1120), et la transmission, par l'appareil de traitement d'authentification, d'informations de résultat d'authentification (S1124) à l'appareil de demande d'authentification,

dans lequel la génération de la première valeur de demande (S1106) basée sur le premier signal pilote comporte :

l'estimation d'informations d'état du canal de communication sans fil (S1104) entre l'appareil de demande d'authentification et l'appareil de traitement d'authentification à partir de l'étape de premier signal pilote ; et

la génération de la première valeur de demande (S1106) à partir des informations d'état du canal de communication sans fil estimées à partir du premier signal pilote.

9. Procédé d'exécution d'authentification selon la revendication 8, dans lequel la génération de la seconde valeur de demande (S1116) basée sur le second signal pilote comporte :

l'estimation des informations d'état du canal de communication sans fil (S1114) entre l'appareil de demande d'authentification et l'appareil de traitement d'authentification à partir du second signal pilote ; et
la génération de la seconde valeur de demande (S1116) à partir des informations d'état du canal de communication sans fil estimées à partir du second signal pilote.

10. Procédé d'exécution d'authentification selon la revendication 8, dans lequel la génération du second signal pilote (S1110) et la transmission du second signal pilote, conjointement à la première valeur de réponse (S1112), à l'appareil de traitement d'authentification comporte :
la transmission d'un identifiant propre de l'appareil de demande d'authentification à l'appareil de traitement d'authentification.

11. Procédé d'exécution d'authentification selon la revendication 10, dans lequel la recherche de la seconde valeur de réponse (S1118) correspondant à la seconde valeur de demande comporte :
la recherche de la seconde valeur de réponse (S1118) correspondant à la seconde valeur de demande à partir d'informations de mise en correspondance correspondant à l'identifiant propre.

10

FIG. 1

FIG. 2

260

320                                340

PILOT SIGNAL          PILOT SIGNAL
240 ◄─ GENERATION UNIT  ◄─  CONTROL UNIT

RESPONSE VALUE TRANSMISSION UNIT  ◄─ 180

360

FIG. 3

280

420                        440

PILOT SIGNAL         SIGNAL PROCESSING
240 ─► RECEPTION UNIT  ─►      UNIT          ─► 140

AUTHENTICATION INFORMATION RECEPTION
UNIT                              ─► 180

460

FIG. 4

160

| 520 | 540 | 560 |
|---|---|---|
| CHALLENGE VALUE GENERATION UNIT | PUF UNIT | RESPONSE VALUE GENERATION UNIT |

FIG. 5

60

600

| 620 | 640 | 660 |
|---|---|---|
| SIGNAL TRANSMISSION AND RECEPTION UNIT | CHANNEL STATE INFORMATION ESTIMATION UNIT | RESPONSE SEARCH UNIT |

AUTHENTICATION PROCESSING UNIT

680

FIG. 6

620

720 760

600

| TRANSMISSION AND RECEPTION CONTROL UNIT | SIGNAL TRANSMISSION UNIT |

| SIGNAL RECEPTION UNIT |

740 780

## FIG. 7

760

820 840

740

| PILOT SIGNAL GENERATION UNIT | PILOT SIGNAL CONTROL UNIT |

| AUTHENTICATION INFORMATION TRANSMISSION UNIT | 680

860

## FIG. 8

780

920                              940

| PILOT SIGNAL RECEPTION UNIT | SIGNAL PROCESSING UNIT |

740 →

640

RESPONSE VALUE RECEPTION UNIT

680

960

FIG. 9

660

1020            1040            1060

| CHALLENGE VALUE GENERATION UNIT | QUERY/RESPONSE SEARCH UNIT | QUERY/RESPONSE DATABASE UNIT |

FIG. 10

FIG. 11

START

S1200 — RECEIVE PILOT SIGNAL

S1202 — PROCESS INFERENCE AND NOISE

S1204 — ESTIMATE CHANNEL STATE INFORMATION

S1206 — GENERATE CHALLENGE VALUE

S1208 — GENERATE RESPONSE VALUE

S1210 — GENERATE PILOT SIGNAL

S1212 — TRANSMIT PILOT SIGNAL AND RESPONSE VALUE

S1214 — RECEIVE AUTHENTICATION RESULT INFORMATION

S1216 — ADDITIONAL AUTHENTICATION?   YES

NO

END

FIG. 12

START

S1300 — RECEIVE PILOT SIGNAL AND RESPONSE VALUE

S1302 — PROCESS INTERFERENCE AND NOISE

S1304 — ESTIMATE CHANNEL STATE INFORMATION

S1306 — GENERATE CHALLENGE VALUE

S1308 — SEARCH FOR RESPONSE VALUE

S1310 — COMPARE RESPONSE VALUES AND GENERATE AUTHENTICATION RESULT INFORMATION

S1312 — TRANSMIT AUTHENTICATION RESULT INFORMATION

S1314 — ADDITIONAL AUTHENTICATION?   YES

NO

END

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20100021446

- WO 2006081306 A2